(19) Europäisches Patentamt / European Patent Office / Office européen des brevets

(11) **EP 4 618 016 A1**

(12) **EUROPEAN PATENT APPLICATION**
published in accordance with Art. 153(4) EPC

(43) Date of publication:
17.09.2025 Bulletin 2025/38

(21) Application number: 23887760.9

(22) Date of filing: 24.10.2023

(51) International Patent Classification (IPC):
*G06T 7/246* (2017.01)　　*G06V 10/80* (2022.01)

(52) Cooperative Patent Classification (CPC):
G06T 7/246; G06T 7/70; G06V 10/77;
G06V 10/774; G06V 10/80

(86) International application number:
PCT/CN2023/126267

(87) International publication number:
WO 2024/099068 (16.05.2024 Gazette 2024/20)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 09.11.2022 CN 202211399309

(71) Applicant: Hangzhou Hikvision Digital
Technology Co., Ltd.
Hangzhou, Zhejiang 310051 (CN)

(72) Inventors:
• WENG, Chunlei
  Hangzhou, Zhejiang 310051 (CN)
• LIU, Nan
  Hangzhou, Zhejiang 310051 (CN)
• ZHAO, Xian
  Hangzhou, Zhejiang 310051 (CN)

(74) Representative: Epping - Hermann - Fischer
Patentanwaltsgesellschaft mbH
Schloßschmidstraße 5
80639 München (DE)

(54) **IMAGE-BASED SPEED DETERMINATION METHOD AND APPARATUS, AND DEVICE AND STORAGE MEDIUM**

(57)　　The present application relates to the technical field of image recognition. Provided are an image-based speed determination method and apparatus, and a device and a storage medium. The method comprises: acquiring a first image and a second image of a target object during movement in an environment space, wherein the acquisition time of the first image is later than the acquisition time of the second image; fusing a first feature extracted from the first image and a second feature extracted from the second image to obtain a fusion feature map, wherein the fusion feature map comprises first pixel position information and second pixel position information of the target object; performing a first convolution operation on the fusion feature map to obtain a displacement information feature map, wherein the displacement information feature map is used for representing a correspondence between a pixel position and a displacement; extracting, from the displacement information feature map, a target displacement corresponding to a target pixel position; and according to the target displacement, determining the movement speed of the target object at the acquisition time of the first image.

acquiring a first image and a second image of a target object during movement of the target object in an environment space　S401

fusing a first feature extracted from the first image and a second feature extracted from the second image to obtain a fusion feature map　S402

performing a first convolution operation on the fusion feature map to obtain a displacement information feature map　S403

extracting, from the displacement information feature map, a target displacement corresponding to a target pixel position, wherein the target pixel position is a pixel position in the displacement information feature map corresponding to the first pixel position information of the target object　S404

determining a movement speed of the target object at an acquisition time of the first image according to the target displacement　S405

Fig.4

# EP 4 618 016 A1

## Description

The present application claims the priority to a Chinese patent application No. 202211399309.3 filed with the China National Intellectual Property Administration (CNIPA) on November 09, 2022 and entitled "Image-based speed determination method and apparatus, and device and storage medium", which is incorporated herein by reference in its entirety.

## Technical Field

The present application relates to the technical field of image recognition, and in particular to an image-based speed determination method and apparatus, a device and a storage medium.

## Background

At present, it has become a common trend to estimate a movement speed of a target object by using a captured video of a target object. For example, if the target object is a target vehicle moving relative to a host vehicle, a current running speed of the target vehicle can be determined by capturing a video of the target vehicle.

In the related art, a moving image is analyzed usually by an optical flow method to predict a movement speed of the target object in the image. An implementation of this method is based on a premise that "an image brightness of an input image is constant". However, in practical applications, it is difficult to ensure a constant image brightness of the target object. It can be seen that predicting the speed with the above method will cause large errors and low accuracy in the predicted running speed due to an unstable brightness of the input image. Therefore, how to avoid an influence of the input image characteristics and improve the accuracy of the predicted running speed has become a technical problem that needs to be solved urgently.

## Summary

Based on the above technical problems, the present application provides an image-based speed determination method and apparatus, a device and a storage medium, which are used to solve the problems of large error and low accuracy in a predicted running speed due to an unstable brightness of an input image.

In a first aspect, an image-based speed determination method is provided, which includes acquiring a first image and a second image of a target object during movement of the target object in an environment space, wherein an acquisition time of the first image is later than an acquisition time of the second image; fusing a first feature extracted from the first image and a second feature extracted from the second image to obtain a fusion feature map, wherein the fusion feature map includes first pixel position information and second pixel position information of the target object, the first pixel position information represents a pixel position of the target object in the first image, and the second pixel position information represents a pixel position of the target object in the second image; performing a first convolution operation on the fusion feature map to obtain a displacement information feature map, wherein the displacement information feature map is used to represent a correspondence between a pixel position and a displacement; extracting, from the displacement information feature map, a target displacement corresponding to a target pixel position, wherein the target pixel position is a pixel position in the displacement information feature map corresponding to the first pixel position information of the target object; determining a movement speed of the target object at the acquisition time of the first image according to the target displacement.

It should be understood that the above-mentioned first feature and second feature include bottom-level features and multiscale features from different environment space angles.

In the speed determination method provided by the present application, different features of a target object at different positions in the environment space are extracted from two frame images, that is, a first feature and a second feature. Then, the first feature and the second feature corresponding to the two frame images are fused in a fusion feature to associate the first feature and the second feature. The first feature and the second feature represent the environment space from different feature angles. Fusion of the first feature and the second feature in one fusion feature is more conducive to identifying and extracting feature differences of the target object in the environment space between the two frame images. Therefore, a displacement of the target object can be more accurately determined by a displacement information feature map based on the fusion feature. Based on this, by extracting information of the target object in the two frame images at different acquisition times and performing a corresponding convolution operation, the displacement of the target object can be directly determined, and thereby the movement speed of the target object at an acquisition time of the first image is determined. This speed determination method is not limited by image characteristics (such as image brightness) of the input image, and is used for various different input frame images, has a wide range of use scenarios and a simple determination process, avoiding the problem of low accuracy in the determined movement speed of the target object in the related art due to the limitation of the image characteristics of the input image.

**In** one possible implementation, the method further includes acquiring a target spatial position of the target object at the acquisition time of the first image, wherein the target spatial position is a three-dimensional position of the target object in the environment space; determining a two-dimensional projection position obtained by projecting the target spatial position on the first image; transforming the two-dimensional projection position into the target pixel position according to a ratio of a size of the first image to a size of the displacement information feature map.

It should be understood that at least one pixel position on the first image includes a two-dimensional projection position obtained by projecting the target spatial position onto the first image, and there is a projection transformation relationship between the spatial position and the first image, that is, when the spatial position is known, the pixel position projected onto the first image is also known. Therefore, this implementation provides a method for acquiring the target pixel position based on the target spatial position of the target object according to the transformation relationship between the two-dimensional pixel position in the first image and the spatial position of the target object in the environment space. Compared to determining the target pixel position by extracting the pixel position of the target object from the first image, this implementation is based on the spatial position of the target object, which is more in line with the environment space scene, so that the obtained target pixel position is more accurate.

**In** another possible implementation, the speed determination method further includes performing a second convolution operation on the fusion feature map to obtain a displacement uncertainty feature map; wherein the displacement uncertainty feature map is used to represent a correspondence between a pixel position and a displacement uncertainty, and the displacement uncertainty indicates an accuracy of a displacement corresponding to any pixel position in the displacement information feature map; extracting a displacement uncertainty corresponding to the target displacement from the displacement uncertainty feature map according to the target pixel position.

It can be understood that there is a one-to-one correspondence between the displacement and the displacement uncertainty.

**In** this implementation, a magnitude of the displacement uncertainty reflects an accuracy of the determined target displacement, that is, the larger the displacement uncertainty is, the lower the accuracy of the obtained target displacement will be. Correspondingly, the smaller the displacement uncertainty is, the higher the accuracy of the obtained target displacement will be. Therefore, in practical applications, multiple groups of two frame images can be acquired to obtain multiple target displacements and multiple displacement uncertainties. Then, a target displacement with the smallest corresponding displacement uncertainty is selected from the multiple target displacements, and the target displacement with the smallest displacement uncertainty is used to determine the movement speed of the target object, so that the determination of the movement speed of the target object is more accurate.

In another possible implementation, fusing the first feature extracted from the first image and the second feature extracted from the second image to obtain the fusion feature map, and performing the first convolution operation on the fusion feature map to obtain the displacement information feature map, includes: inputting the first image and the second image into a displacement determination model to obtain the displacement information feature map output by the displacement determination model.

It can be understood that the above displacement determination model is a model trained based on training samples.

In this implementation, by inputting two frame images of the target object at different acquisition times into the displacement determination model, the displacement of the target object can be directly determined, and thereby the movement speed of the target object at the acquisition time of the first image is determined. The displacement can be determined more quickly by replacing multiple execution steps of feature extraction, fusion and the first convolution operation with the above one step of inputting two frame images into the displacement determination model, thereby improving the efficiency of determining the movement speed of the target object.

In another possible implementation, the displacement determination model includes a feature extraction module, a fusion module, and a displacement information feature map determination module; the feature extraction module is configured for extracting the first feature from the first image and extract the second feature from the second image; the fusion module is configured for fusing the first feature and the second feature to output the fusion feature map; the displacement information feature map determination module is configured for outputting the displacement information feature map according to the fusion feature map.

In another possible implementation, the displacement determination model further includes a displacement uncertainty feature map determination module; wherein the displacement uncertainty feature map determination module is configured for outputting the displacement uncertainty feature map according to the fusion feature map.

In this implementation, by inputting two frame images of the target object acquired at different acquisition times into the displacement determination model, the displacement uncertainty of the target object can be directly determined, that is, by inputting the fusion feature map obtained based on the two frame images into the displacement uncertainty feature map determination module, the displacement uncertainty of the target object can be obtained. This method is simple and direct, and is convenient for practical application.

In a second aspect, a training method for a displacement determination model is provided, which includes acquiring a training sample set, wherein each training sample in the training sample set includes a first training image and a second training image of a sample object during movement of the sample object, and a label corresponding to the training sample; a first sampling time of the first training image is later than a second sampling time of the second training image; and the label includes a first actual pixel position of the sample object in the first training image and an actual displacement of the sample object occurred between the first sampling time and the second sampling time; training a preset initial model by using the training sample set, to obtain the displacement determination model; wherein the initial model includes a feature extraction module, a fusion module and a displacement information feature map determination module; the feature extraction module is configured for extracting a first feature from the first training image and a second feature from the second training image; the fusion module is configured for fusing the first feature and the second feature to obtain a fusion feature map, wherein the fusion feature map includes first pixel position information and second pixel position information of the sample object, the first pixel position information represents a pixel position of the sample object in the first training image, and the second pixel position information represents a pixel position of the sample object in the second training image; the displacement information feature map determination module is configured for outputting a displacement information feature map according to the fusion feature map, wherein the displacement information feature map represents a correspondence between a pixel position and a displacement; a displacement in the displacement information feature map corresponding to the first actual pixel position is a predicted displacement output by the initial model.

In one possible implementation, training the preset initial model by using the training sample set, to obtain the displacement determination model, includes: inputting the training sample into the initial model to obtain the predicted displacement output by the initial model; determining a first training loss according to the predicted displacement and the actual displacement; adjusting parameters of the initial model according to a training loss to obtain the displacement determination model; wherein, the training loss includes the first training loss.

In another possible implementation, the label further includes an actual pixel displacement and a first actual position of the sample object, and the training method further includes: predicting an actual position of the sample object at the second sampling time according to the predicted displacement and the first actual position to obtain a predicted second actual position; predicting an actual pixel position of the sample object in the second training image according to the predicted second actual position to obtain a predicted second actual pixel position; obtaining a predicted pixel displacement according to the predicted second actual pixel position and the first actual pixel position; determining a second training loss according to the predicted pixel displacement and the actual pixel displacement; the training loss further includes the second training loss.

In another possible implementation, the initial model further includes a displacement uncertainty feature map determination module; the displacement uncertainty feature map determination module is configured for outputting a displacement uncertainty feature map based on the fusion feature map, wherein the displacement uncertainty feature map is used to represent a correspondence between a pixel position and a displacement uncertainty, and the displacement uncertainty represents an accuracy of a displacement corresponding to any pixel position in the displacement information feature map.

In another possible implementation, training the preset initial model by using the training sample set, to obtain the displacement determination model further, includes: determining a third training loss according to the displacement uncertainty and the actual displacement; the training loss further includes the third training loss.

In a third aspect, an image-based speed determination apparatus is provided, which includes a first acquisition unit, configured for acquiring a first image and a second image of a target object during movement of the target object in an environment space, wherein an acquisition time of the first image is later than an acquisition time of the second image; a fusion unit, configured for fusing a first feature extracted from the first image and a second feature extracted from the second image to obtain a fusion feature map, wherein the fusion feature map includes first pixel position information and second pixel position information of the target object, the first pixel position information represents a pixel position of the target object in the first image, and the second pixel position information represents a pixel position of the target object in the second image; a convolution unit, configured for performing a first convolution operation on the fusion feature map to obtain a displacement information feature map, wherein the displacement information feature map is used to represent a correspondence between a pixel position and a displacement; a displacement determination unit, configured for extracting, from the displacement information feature map, a target displacement corresponding to a target pixel position, wherein the target pixel position is a pixel position in the displacement information feature map corresponding to the first pixel position information of the target object; a speed determination unit, configured for determining a movement speed of the target object at the acquisition time of the first image according to the target displacement.

In one possible implementation, the displacement determination unit is further specifically configured for acquiring a target spatial position of the target object at the acquisition time of the first image, wherein the target spatial position is a three-dimensional position of the target object in the environment space; determining a two-dimensional projection position obtained by projecting the target spatial position on the first image; transforming the two-dimensional projection position into the target pixel position according to a ratio of a size of the first image to a size of the displacement information feature map.

In another possible implementation, the speed determination apparatus further includes a displacement uncertainty determination unit; the displacement uncertainty determination unit is specifically configured for performing a second convolution operation on the fusion feature map to obtain a displacement uncertainty feature map, wherein the displacement uncertainty feature map is used to represent a correspondence between a pixel position and a displacement uncertainty, and the displacement uncertainty indicates an accuracy of a displacement corresponding to any pixel position in the displacement information feature map; extracting a displacement uncertainty corresponding to the target displacement from the displacement uncertainty feature map according to the target pixel position.

In another possible implementation, the speed determination apparatus is further configured for inputting the first image and the second image into a displacement determination model to obtain the displacement information feature map output by the displacement determination model.

In another possible implementation, the displacement determination model includes a feature extraction module, a fusion module, and a displacement information feature map determination module; the feature extraction module is configured for extracting the first feature from the first image and extract the second feature from the second image; the fusion module is configured for fusing the first feature and the second feature to output the fusion feature map; the displacement information feature map determination module is configured for outputting the displacement information feature map according to the fusion feature map.

In another possible implementation, the displacement determination model further includes a displacement uncertainty feature map determination module; the displacement uncertainty feature map determination module is configured for outputting the displacement uncertainty feature map according to the fusion feature map.

In a fourth aspect, a training apparatus for a displacement determination model is provided, which includes a second acquisition unit, configured for acquiring a training sample set, wherein each training sample in the training sample set includes a first training image and a second training image of a sample object during movement of the sample object, and a label corresponding to the training sample; a first sampling time of the first training image is later than a second sampling time of the second training image; and the label includes a first actual pixel position of the sample object in the first training image and an actual displacement of the sample object occurred between the first sampling time and the second sampling time; a feature map training unit, configured for training a preset initial model by using the training sample set, to obtain the displacement determination model; wherein the initial model includes a feature extraction module, a fusion module and a displacement information feature map determination module; the feature extraction module is configured for extracting a first feature from the first training image and a second feature from the second training image; the fusion module is configured for fusing the first feature and the second feature to obtain a fusion feature map, wherein the fusion feature map includes first pixel position information and second pixel position information of the sample object, the first pixel position information represents a pixel position of the sample object in the first training image, and the second pixel position information represents a pixel position of the sample object in the second training image; the displacement information feature map determination module is configured for outputting a displacement information feature map according to the fusion feature map, wherein the displacement information feature map represents a correspondence between a pixel position and a displacement; a displacement in the displacement information feature map corresponding to the first actual pixel position is a predicted displacement output by the initial model.

In one possible implementation, the feature map training unit is specifically configured for inputting the training sample into the initial model to obtain the predicted displacement output by the initial model; determining a first training loss according to the predicted displacement and the actual displacement; adjusting parameters of the initial model according to a training loss to obtain the displacement determination model; wherein, the training loss includes the first training loss.

In another possible implementation, the feature map training unit is further specifically configured for predicting an actual position of the sample object at the second sampling time according to the predicted displacement and the first actual position to obtain a predicted second actual position; predicting an actual pixel position of the sample object in the second training image according to the predicted second actual position to obtain a predicted second actual pixel position; obtaining a predicted pixel displacement according to the predicted second actual pixel position and the first actual pixel position; determining a second training loss according to the predicted pixel displacement and the actual pixel displacement; the training loss further includes the second training loss.

In another possible implementation, the displacement uncertainty feature map determination module is configured for outputting a displacement uncertainty feature map based on the fusion feature map, wherein the displacement uncertainty feature map is used to represent a correspondence between a pixel position and a displacement uncertainty, and the displacement uncertainty represents an accuracy of a displacement corresponding to any pixel position in the displacement information feature map.

In another possible implementation, the feature map training unit is further specifically configured for determining a third training loss according to the displacement uncertainty and the actual displacement; the training loss further includes the third training loss.

In a fifth aspect, an image-based speed determination apparatus is provided, which includes a memory and a processor; the memory is coupled to the processor; the memory is configured to store computer program codes including computer instructions; wherein, the computer instructions, when execute by the processor, cause the image-based speed determination apparatus to carry out the image-based speed determination method of the first aspect.

In a sixth aspect, a computer-readable storage medium is provided, wherein the computer-readable storage medium includes computer instructions; wherein, the computer instructions, when running on an image-based speed determination apparatus, cause the image-based speed determination apparatus to carry out the image-based speed determination method of the first aspect.

In a seventh aspect, a training apparatus for a displacement determination model is provided, which includes a memory and a processor; the memory is coupled to the processor; the memory is configured to store computer program codes including computer instructions; wherein, the computer instructions, when execute by the processor, cause the training apparatus for the displacement determination model to carry out the training method for the displacement determination model of the second aspect.

In an eighth aspect, a computer-readable storage medium is provided, wherein the computer-readable storage medium includes computer instructions; wherein, the computer instructions, when running on a training apparatus for a displacement determination model, cause the training apparatus for the displacement determination model to carry out the training method for the displacement determination model of the second aspect.

In a ninth aspect, a computer device is provided, which includes a processor and a memory. The processor is connected to the memory, the memory is configured to store computer-executable instructions, and the processor executes the computer-executable instructions stored in the memory, thereby carrying out any one of the methods provided in the first and second aspects.

In a tenth aspect, a computer program product is provided, which includes computer execution instructions, which, when running on a computer, cause the computer to carry out any one of the methods provided in the first and second aspects.

In an eleventh aspect, a computer program is provided, which when running on a computer, causes the computer to carry out any one of the methods provided in the first and second aspects.

The technical effects brought about by any implementation in the second aspect to the eleventh aspect can refer to the technical effects brought about by the corresponding implementation in the first aspect, and will not be repeated here.

**Brief Description of the Drawings**

In order to more clearly describe the technical solutions of the embodiments of the present application, accompanying drawings that need to be used in the embodiments will be briefly described below. Obviously, the accompanying drawings described below are for only some of the embodiments of the present application. Those skilled in the art may also obtain other embodiments based on these accompanying drawings without any creative efforts.

Fig. 1 is a schematic diagram of a composition of a speed prediction system provided by an embodiment of the present application;

Fig. 2 is a schematic diagram of an application scenario of an image-based speed determination method provided by an embodiment of the present application;

Fig. 3 is a schematic diagram of a composition of a speed processing apparatus 300 provided by an embodiment of the present application;

Fig. 4 is a schematic flow chart of an image-based speed determination method provided by an embodiment of the present application;

Fig. 5 is a schematic diagram of a feature fusion process provided by an embodiment of the present application;

Fig. 6 is a schematic diagram of a network structure of a displacement determination model provided by an embodiment of the present application;

Fig. 7 is a schematic flow chart of a method for training a displacement determination model provided by an embodiment of the present application;

Fig. 8 is a schematic structure diagram of an image-based speed determination apparatus provided by an embodiment of the present application;

Fig. 9 is a schematic structure diagram of a training apparatus for a displacement determination model provided by an embodiment of the present application.

**Detailed Description**

In order to make the objective, technical solutions and advantages of the present application clearer and more understandable, the present application will be described in more detail below with reference to the accompanying drawings and embodiments. Obviously, the described embodiments are only some, and not all, of the embodiments of the present invention. All other embodiments obtained based on the embodiments of the present application by those skilled in the art fall into the scope of protection of the present application.

In the description of the present application, unless otherwise specified, "/" means "or", for example, A/B can mean A or B. "And/or" herein is merely an association relationship describing associated objects, which indicates that three relationships may exist. For example, A and/or B can mean that A exists alone, A and B exist at the same time, and B exists alone. In addition, "at least one" means one or more, and "multiple" means two or more. The words "first", "second", etc. do not limit a quantity and execution order, and the words "first", "second", etc. do not limit them to be different.

It should be noted that, in the present application, the words such as "as an example" or "for example" are used to indicate examples, illustrations or descriptions. Any embodiment or design described as "as an example" or "for example" in the present application should not be interpreted as being more preferred or more advantageous than other embodiments or designs. Specifically, the use of words such as "as an example" or "for example" is intended to present related concepts in a specific way.

First of all, in order to facilitate the understanding of the present application, the relevant elements involved in the present application are described.

**Low-level features of an image:** contour, edge, color, texture, and shape features. The edge and contour can reflect content of an image; if the edge and key point can be reliably extracted, many visual problems can be basically solved. The low-level features of an image have less semantic information and the accurate target location.

**multiscale feature of an image:** high-level semantic features of image features in both spatial direction and channel direction are extracted through convolution kernels of different sizes. Wherein, the high-level semantic features of an image refer to features that can be seen. For example, if the low-level features of a vehicle are extracted, a contour and color of the vehicle can be extracted, and the high-level features will be displayed as a vehicle. The high-level features have relatively rich semantic information and the relatively rough target location.

**Image fusion feature extraction process:** connecting a low-level feature map with a high-level feature map, to pass information at the low level to the high level.

Secondly, a brief introduction to the application scenarios involved in the present application is given.

At present, it has become a common trend to estimate a movement speed of a target object by using a captured video of the target object. For example, if the target object is a target vehicle moving relative to a host vehicle, a current running speed of the target vehicle can be determined by capturing a video of the target vehicle. In the related art, a moving image is analyzed usually by an optical flow method to predict a movement speed of the target object in the image. An implementation of this method is based on a premise that "a image brightness of an input image is constant". However, in practical applications, it is difficult to ensure a constant image brightness of the target object. It can be seen that predicting the speed with the above method will cause large errors and low accuracy in the predicted running speed due to an unstable brightness of the input image. Therefore, how to avoid an influence of the input image characteristics and improve the accuracy of the predicted running speed has become a technical problem that needs to be solved urgently.

Based on this, the present application provides an image-based speed determination method, which extracts different features of a target object at different positions in the environment space from two frame images, that is, a first feature and a second feature. Then, the first feature and the second feature corresponding to the two frame images are fused in a fusion feature to associate the first feature and the second feature. The first feature and the second feature represent the environment space from different feature angles. Fusion of the first feature and the second feature in one fusion feature is more conducive to identifying and extracting feature differences of the target object in the environment space between the two frame images. Therefore, a displacement of the target object can be more accurately determined by a displacement information feature map based on the fusion feature. Based on this, by extracting information of the target object in the two frame images at different acquisition times and performing a corresponding convolution operation, the displacement of the target object can be directly determined, and thereby the movement speed of the target object at an acquisition time of the first image is determined. This speed determination method is not limited by image characteristics (such as image brightness) of the input image, and is used for various different input frame images, has a wide range of use scenarios and a simple determination process, avoiding the problem of low accuracy in the determined movement speed of the target object in the related art due to the limitation of the image characteristics of the input image.

Again, a brief introduction is given to the implementation environment (implementation architecture) involved in the present application.

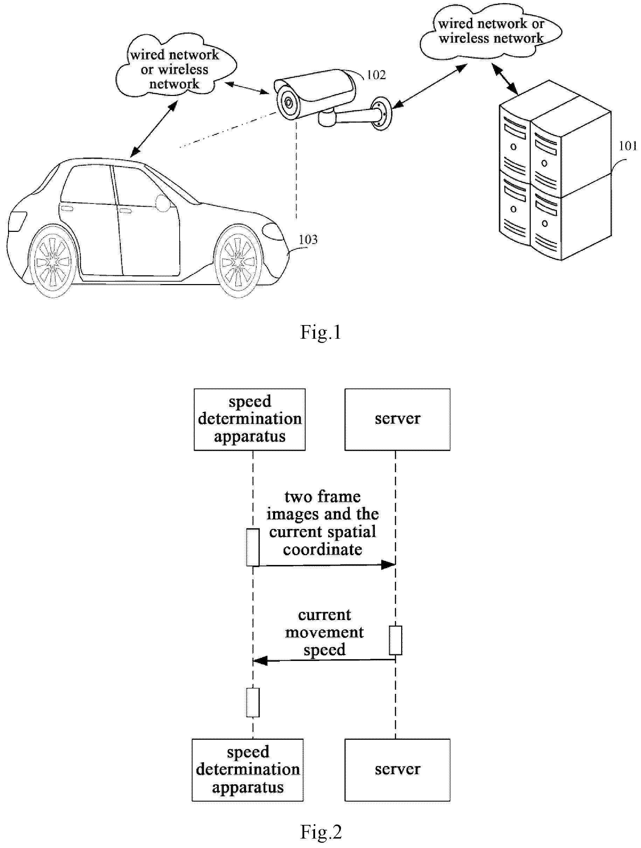

An embodiment of the present application provides a schematic diagram of a composition of a speed prediction system as shown in Fig. 1. As shown in Fig. 1, the speed determination system 10 includes a server 101, a speed determination apparatus 102, and a first moving device 103 (i.e., a target object). The server 101 can establish a connection with the speed determination apparatus 102 and the moving device 103 through a wired network or a wireless network. The speed determination apparatus 102 and the moving device 103 can be connected through a wired network or a wireless network.

As shown in Fig. 2, the server of the present application stores a pre-trained displacement determination model. The speed determination apparatus acquires two frame images of the first moving device at different times during movement of the first moving device and the current spatial coordinate of the first moving device, and sends the two frame images and the current spatial coordinate to the server. The server inputs the two frame images into the displacement determination model to obtain a displacement information feature map. The server determines pixel coordinates of the first moving device based on the current spatial coordinate, and determines the current movement speed of the first moving device through positions of the pixel coordinates of the first moving device in the displacement information feature map. The server then sends the current movement speed to the speed determination apparatus so that the speed determination apparatus displays the current movement speed.

It should be noted that each of the two frame images includes multiple objects, that is, multiple moving devices, and the target object is the first moving device. Therefore, the displacement information feature map includes displacements of the multiple moving devices.

As an example, the speed determination apparatus can be set on a second moving device, and the speed determination apparatus acquires two frame images of the moving device at different times (t1 and t2, t1 is later than t2) during movement of the moving device, and determines a movement speed of the first moving device at time t2 based on the two different frame images. The speed determination apparatus can also be arranged at a fixed position to determine the movement speed of the first moving device. The location where the second moving device is arranged can be determined according to a specific application scenario. For example, when applied to an autonomous driving vehicle scenario, the speed determination apparatus is arranged on the vehicle. For another example, the speed determination apparatus is arranged on a highway to predict the speed of a vehicle running on the highway. Therefore, the present application does not specifically limit the use scenario and installation method of the speed determination apparatus.

In some embodiments, the server may be a single server, or a server cluster composed of multiple servers. In some implementations, the server cluster may also be a distributed cluster. The present disclosure does not limit the specific implementation of the server.

In addition, as one implementation, the image-based speed determination method of the present application can also be applied to a computer device. The embodiment of the present application does not impose any restrictions on the specific form of the computer device. For example, the computer device can be terminal equipment or a network device. Wherein, the terminal equipment can be called terminal, user equipment (UE), terminal device, access terminal, user unit, user station, mobile station, remote station, remote terminal, mobile device, user terminal, wireless communication device, user agent or user device, etc. The terminal equipment can specifically be a mobile phone, augmented reality (AR) device, virtual reality (VR) device, tablet computer, notebook computer, ultra-mobile personal computer (UMPC), netbook, personal digital assistant (PDA), etc. The network device can specifically be a server, etc. Wherein, the server can be one physical or logical server, or two or more physical or logical servers that share different responsibilities and cooperate with each other to realize the functions of the server.

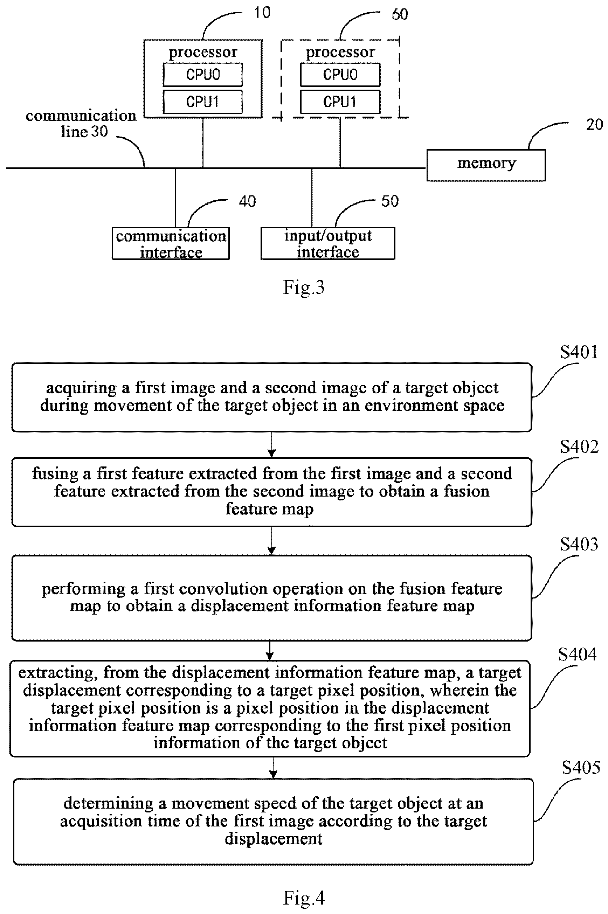

In terms of hardware implementation, the above-mentioned computer device can be implemented by a computer device as shown in Fig. 3. As shown in Fig. 3, it is a schematic diagram of a hardware structure of a computer device provided by an embodiment of the present application. This computer device can be used to implement the functions of the above-mentioned computer device.

Fig. 3 is a schematic diagram of a composition of an image-based speed processing apparatus 300 provided by an embodiment of the present application. As shown in Fig. 3, the speed processing apparatus 300 may include a processor 10, a memory 20, a communication line 30, a communication interface 40, and an input/output interface 50.

The processor 10, the memory 20, the communication interface 40 and the input/output interface 50 may be connected to each other via the communication line 30.

The processor 10 is configured to execute instructions stored in the memory 20 to implement a gesture recognition method provided by the following embodiments of the present application. The processor 10 can be a central processing unit (CPU), a general-purpose network processor (NP), a digital signal processor (DSP), a microprocessor, a microcontroller, a programmable logic device (PLD), or any combination thereof. The processor 10 can also be any other device with a processing function, such as a circuit, a device, or a software module, which is not limited in the embodiments of the present application. In one example, the processor 10 may include one or more CPUs, such as CPU0 and CPU1 in Fig. 3. As an optional implementation, the electronic device may include multiple processors; for example, in addition to the processor 10, the electronic device may also include a processor 60 (shown as an example by a dotted line in Fig. 3).

The memory 20 is configured to store instructions. For example, the instructions may be computer programs. Optionally, the memory 20 may be a read-only memory (ROM) or other types of static storage devices that can store static information and/or instructions, or a random access memory (RAM) or other types of dynamic storage devices that can store information and/or instructions, or an electrically erasable programmable read-only memory (EEPROM), a compact disc read-only memory (CD-ROM) or other compact disc storage, optical disc storage (including compressed optical disc, laser disc, optical disc, digital versatile disc, Blu-ray disc, etc.), a magnetic disk storage medium or other magnetic storage devices, etc., which is not limited in the embodiments of the present applications.

It should be noted that the memory 20 may exist independently of the processor 10 or may be integrated with the processor 10. The memory 20 may be located inside the speed processing apparatus 300 or outside the speed processing apparatus 300, which is not limited in the embodiments of the present application.

The communication line 30 is configured to transmit information between various components included in the electronic device. The communication line 30 can be an industry standard architecture (ISA) line, a peripheral component interconnect (PCI) line, or an extended industry standard architecture (EISA) line, etc. The communication line 30 can be divided into an address line, a data line, a control line, etc. For ease of representation, only one solid line is used in Fig. 3, but it does not mean that there is only one line or one type of line.

The communication interface 40 is configured to communicate with other devices or other communication networks. The other communication networks can be Ethernet, radio access network (RAN), wireless local area network (WLAN), etc. The communication interface 40 can be a module, a circuit, a transceiver or any device capable of realizing communication.

The input/output interface 50 is configured to implement human-computer interaction between a user and the electronic device, for example, to implement action interaction, text interaction, or voice interaction between the user and the speed processing apparatus 300.

For example, the input/output interface 50 may be the central control screen, or a physical button in the operation area, etc. The action interaction (such as gesture interaction) or text interaction between the vehicle occupant and the speed processing apparatus 300 may be achieved through the central control screen or the physical button, etc.

As an example, the input/output interface 50 may also be an audio module, which may include a speaker and a microphone, etc., and voice interaction between the user and the speed processing apparatus 300 may be achieved through the audio module.

It should be noted that the structure shown in Fig. 3 does not constitute a limitation on the speed processing apparatus 300 (electronic device). In addition to the components shown in Fig. 3, the speed processing apparatus 300 (electronic device) may include more or fewer components than shown in the figure, or a combination of certain components, or a different arrangement of components.

The image-based speed determination method provided by the embodiment of the present application is described below in conjunction with the accompanying drawings. In order to facilitate understanding, "coordinates" are used to describe "position" below.

Fig. 4 is a schematic flow chart of an image-based speed determination method provided by an embodiment of the present application. Optionally, the method can be executed by a speed processing apparatus having the hardware structure shown in Fig. 3 above. As shown in Fig. 4, the method includes S401 to S405.

S401, acquiring a first image and a second image of a target object during movement of the target object in an environment space.

Wherein, an acquisition time of the first image is later than an acquisition time of the second image.

For ease of understanding, the acquisition time of the first image is referred to as first acquisition time hereinafter; the acquisition time of the second image is referred to as second acquisition time, and the first acquisition time of the first image is later than the second acquisition time of the second image.

S402, fusing a first feature extracted from the first image and a second feature extracted from the second image to obtain a fusion feature map.

Wherein the fusion feature map includes first pixel position information and second pixel position information of the target object, the first pixel position information represents a pixel position of the target object in the first image, and the second pixel position information represents a pixel position of the target object in the second image.

It should be understood that the above-mentioned first feature and second feature include bottom-level features and multiscale features from different environment space angles.

That is, by using a feature extraction algorithm, the bottom-level feature and multiscale features from an environment space angle corresponding to the first image are extracted from the first image as the first feature, and the bottom-level feature and multiscale feature from an environment space angle corresponding to the second image are extracted from the second image as the second feature. The environment spatial angle corresponding to the first image is different from the environment spatial angle corresponding to the second image, so the first feature and the second feature include the bottom-level features and multiscale features from different environment space angles.

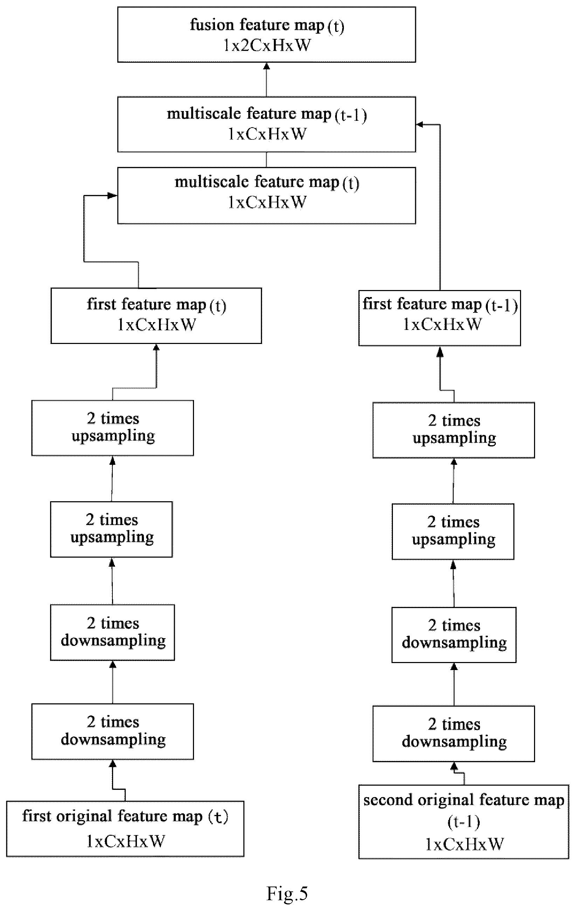

As an example, as shown in Fig. 5, taking the first feature being feature(t) and the second feature being feature(t-1) as an example, the fusion process of the first feature and the second feature is described as follows. Firstly, a first original feature map(t) of 4-dimension $1 \times C \times H \times W$ and a second original feature map(t-1) of 4-dimension $1 \times C \times H \times W$ are respectively downsampled twice and upsampled twice (i.e., 2 times downsampling, 2 times downsampling, 2 times upsampling, 2 times upsampling), to obtain a first feature map(t) of 4-dimension $1 \times C \times H \times W$ and a second feature map(t-1) of 4-dimension $1 \times C \times H \times W$ accordingly. Then, multiscale feature extraction is performed on the first feature map(t) and the second feature map(t-1), to obtain a multiscale feature map(t-1) of 4-dimension $1 \times C \times H \times W$ and a multiscale feature map(t) of 4-dimension $1 \times C \times H \times W$ respectively. Finally, the above multiscale feature map(t-1) and the multiscale feature map(t) are fused to obtain a fusion feature map(t) of 4-dimension $1 \times 2C \times H \times W$. Wherein, for the 4-dimension $1 \times C \times H \times W$, 1 represents the current image, C represents the number of channels, H represents the length and W represents the width.

That is to say, as shown in Fig. 5, the step of fusing the multiscale feature map(t) extracted from the first original feature map(t) and the multiscale feature map(t-1) extracted from the second original feature map(t-1) to obtain the fusion feature map(t) of 4-dimension $1 \times 2C \times H \times W$ is the step of fusing the first feature extracted from the first image and the second feature extracted from the second image to obtain the fusion feature map in the embodiment of the present application.

S403, performing a first convolution operation on the fusion feature map to obtain a displacement information feature map.

Wherein, the displacement information feature map is used to represent a correspondence between a pixel position and a displacement, that is, the displacement information feature map represents a correspondence between a pixel coordinate and the displacement of the target object during the acquisition time interval between the first acquisition time and the second acquisition time.

Wherein, the above pixel position may also be referred to as the pixel coordinate.

That is to say, in the correspondence between the pixel position and the displacement, any pixel position is a pixel position in the displacement information feature map, and the displacement corresponding to any pixel position refers to a displacement of the object content at a pixel position in the first image corresponding to the any pixel position in the above-mentioned acquisition time interval; in this way, by identifying the corresponding pixel position of the target object in the displacement information feature map, the displacement of the target object can be analyzed based on the identified pixel position.

Optionally, in one specific implementation, the above steps S402-S403 may include the following step 11:
Step 11: inputting the first image and the second image into a displacement determination model to obtain the displacement information feature map output by the displacement determination model.

In this specific implementation, after the first image and the second image are acquired, the displacement information feature map can be directly obtained by using a pre-trained displacement determination model.

It can be understood that the above displacement determination model is a model trained based on training samples.

Optionally, in one specific implementation, the displacement determination model includes a feature extraction module, a fusion module, and a displacement information feature map determination module;

the feature extraction module is configured for extracting the first feature from the first image and extract the second feature from the second image;

the fusion module is configured for fusing the first feature and the second feature to output the fusion feature map;

the displacement information feature map determination module is configured for outputting the displacement information feature map according to the fusion feature map.

In this specific implementation, by inputting two frame images of the target object at different acquisition times into the displacement determination model, the displacement of the target object can be directly determined, and thereby the movement speed of the target object at the acquisition time of the first image is determined.

That is to say, the feature extraction module extracts the first feature from the first image and extracts the second feature from the second image, and then the first feature and the second feature are fused by using the fusion module to obtain and output the fusion feature map, and finally, the displacement information feature map is output based on the fusion feature map by using the displacement information feature map determination module.

As can be seen from the above, the feature extraction module, the fusion module and the displacement information feature map determination module are three modules included in the displacement determination model. That is to say, in this specific implementation, the displacement can be determined more quickly by replacing multiple execution steps of feature extraction, fusion and the first convolution operation with one step of inputting two frame images into the displacement determination model, thereby improving the efficiency of determining the movement speed of the target object.

S404, extracting, from the displacement information feature map, a target displacement corresponding to a target pixel position, wherein the target pixel position is a pixel position in the displacement information feature map corresponding to the first pixel position information of the target object.

It should be understood that at least one pixel coordinate on the first image includes a two-dimensional projection coordinate obtained by projecting a target spatial coordinate onto the first image, and there is a projection transformation relationship between the spatial coordinate and the pixel coordinate of the first image. That is, when the spatial coordinate is known, the pixel coordinate projected onto the first image is also known.

Based on this, according to the transformation relationship between the two-dimensional pixel position in the first image and the spatial coordinate of the target object in the environment space, an embodiment of the present application provides a method for acquiring the target pixel coordinate based on the target spatial coordinate of the target object.

Optionally, in one specific implementation, the method for acquiring the target pixel coordinate based on target spatial coordinate of the target object provided by the embodiment of the present application may include the following steps 22-24:

Step 22: acquiring a target spatial coordinate of the target object at the first acquisition time, wherein the target spatial coordinate is a three-dimensional coordinate of the target object in the environment space;

Step 23: determining a two-dimensional projection coordinate obtained by projecting the target spatial coordinate on the first image;

Step 24: transforming the two-dimensional projection position into the target pixel position according to a ratio of a size of the first image to a size of the displacement information feature map.

**In** this specific implementation, the target spatial coordinate of the target object at the first acquisition time can be acquired, wherein the obtained target spatial coordinate refers to the three-dimensional coordinate of the target object in the environment space. Then, the two-dimensional projection coordinate obtained by projecting the above target spatial coordinate on the first image are determined, so that the two-dimensional projection coordinate can be transformed into the target pixel coordinate according to the ratio of the size of the first image to the size of the displacement information feature map.

It can be seen from the above that, compared with determining the target pixel coordinate by extracting the pixel coordinate of the target object from the first image, the specific implementation of the above steps 22-24 based on the spatial coordinate of the target object, is more adaptable to the environment space scene and improves the accuracy of the acquired target pixel coordinate.

The above coordinate can also be called a position. That is, the target spatial coordinate can also be called a target spatial position; the three-dimensional coordinate can also be called a three-dimensional position; the two-dimensional projection coordinate can also be called a two-dimensional projection position; the target pixel coordinate can also be called a target pixel position.

Therefore, the specific implementation of the above steps 22-23 may also be:
acquiring a target spatial position of the target object at the acquisition time of the first image, wherein the target spatial position is a three-dimensional position of the target object in the environment space; determining a two-dimensional projection position obtained by projecting the target spatial position on the first image; and transforming the two-dimensional projection position into a target pixel position according to the ratio of the size of the first image to the size of the displacement information feature map.

That is to say, the acquired target spatial position of the target object at the acquisition time of the first image is the target spatial coordinate of the target object at the first acquisition time.

In some examples, a 3 dimensions (3D) target detection method is used to obtain the target spatial coordinate. For example, taking the target object being a vehicle as an example, the autonomous driving vehicle obtains the spatial coordinate of the obstacle through the 3D target detection method, to identify the precise position and orientation of the obstacle.

As one implementation, as shown in the following formula (1), in the above three-dimensional space, a three-dimensional target spatial coordinate $(x,y,z)_p$ can be transformed by the following matrix transformation method to obtain the two-dimensional projection coordinate $(u,v)_p$ of the target object in the first image. The above three-dimensional target spatial coordinate is the target spatial coordinate in the present application.

That is to say, when the three-dimensional target detection method is used to obtain the two-dimensional projection coordinate, the three-dimensional target spatial coordinate $(x,y,z)_p$ of the target object in the three-dimensional space are transformed into the two-dimensional projection coordinate $(u,v)_p$ of the target object in the first image through the following matrix transformation method.

In this way, after obtaining the two-dimensional projection coordinate $(u,v)_p$ of the target object in the first image, the two-dimensional projection coordinate $(u,v)_p$ can be scaled to obtain the target pixel coordinate that matches the displacement information feature map.

The two-dimensional projection coordinate after scaling is rounded up or down to the nearest integer, such as 4.3 is rounded to 4, and 4.9 is rounded to 5.

That is to say, if the result after scaling is 4.3, the result is rounded down to 4; if the result after scaling is 4.9, the result is rounded up to 5.

In this way, the target displacement $(dx,dy,dz)_p$ can be obtained from the displacement information feature map based on the target pixel coordinate $(u,v)_{ps}$.

$$\begin{bmatrix} u \\ v \\ 1 \end{bmatrix}^t_p = \begin{bmatrix} fx & 0 & cx \\ 0 & fy & cy \\ 0 & 0 & 1 \end{bmatrix} \times \begin{bmatrix} x \\ y \\ z \end{bmatrix}^t_p \qquad (1)$$

Wherein, $\begin{bmatrix} x \\ y \\ z \end{bmatrix}^t_p$ represents the three-dimensional spatial coordinate vector of the target object in the x-direction, y-direction, and z-direction at the first acquisition time, $\begin{bmatrix} u \\ v \\ 1 \end{bmatrix}^t_p$ represents the coordinate vector composed of the pixel coordinate of the target object at the first acquisition time and the real number 1, t represents time, p represents the target object, fx represents an equivalent focal length in the horizontal direction, fy represents an equivalent focal length in the vertical direction, cx represents a camera intrinsic parameter center in the horizontal direction, cy represents a camera intrinsic parameter center in the vertical direction, u represents the pixel coordinate in the horizontal direction on the image, and v represents the pixel coordinate in the vertical direction on the image.

S405, determining a movement speed of the target object at an acquisition time of the first image according to the target displacement.

After the target displacement is acquired, the movement speed of the target object at the acquisition time of the first image may be determined by using the target displacement of the target object, the first acquisition time, and the second acquisition time.

As an example, as shown in the following formula (2), in the three-dimensional space, the above three-dimensional target spatial coordinate can be transformed by the following matrix transformation method to obtain the movement speed of the target object.

$$\begin{bmatrix} vx \\ vy \\ vz \end{bmatrix}^t_p = \begin{bmatrix} dx \\ dy \\ dz \end{bmatrix}_p \times \frac{1}{time_t - time_{t-1}} \qquad (2)$$

wherein, $\begin{bmatrix} vx \\ vy \\ vz \end{bmatrix}^t_p$ represents the speed vector, $\begin{bmatrix} dx \\ dy \\ dz \end{bmatrix}_p$ represents the target displacement vector of the target displacement, dx represents the displacement in the x-direction, dy represents the displacement in the y-direction, dz represents the displacement in the z-direction, vx represents the speed in the x-direction, vy represents the speed in the y-direction, vz represents the speed in the z-direction. $time_t$ is the first acquisition time, and $time_{t-1}$ is the second acquisition time.

Based on the implementation of the above-mentioned image-based speed determination method, different features of the target object at different positions in the environment space, that is, the first feature and the second feature, can be extracted from the two frame images respectively. Then, the first feature and the second feature corresponding to the two frame images are fused in the fusion feature to associate the first feature and the second feature. The first feature and the second feature represent the environment space from different feature angles. Fusion of the first feature and the second feature in one fusion feature is more conducive to identifying and extracting feature differences of the target object in the environment space between the two frame images. Therefore, a displacement of the target object can be more accurately determined by the displacement information feature map obtained based on the fusion feature.

Based on this, by extracting the information of the target object in the two frame images at different acquisition times and performing the corresponding convolution operation, the displacement of the target object can be directly determined, and thereby the movement speed of the target object at the acquisition time of the first image is determined. This speed determination method is not limited by image characteristics (such as image brightness) of the input image, and is used for various different input frame images, and has a wide range of use scenarios and a simple determination process, avoiding the problem of low accuracy in the determined movement speed of the target object in the related art due to the limitation of the image characteristics of the input image.

Based on the displacement determined in the above implementations, two methods for determining the displacement uncertainty of the target displacement are provided below to evaluate the accuracy of the target displacement. It can be understood that the displacement corresponds to the displacement uncertainty one by one.

Based on this, optionally, in one specific implementation, the image-based speed determination method provided by the embodiment of the present application may further include the following steps 33-34:

Step 33: performing a second convolution operation on the fusion feature map to obtain a displacement uncertainty feature map; wherein the displacement uncertainty feature map is used to represent a correspondence between a pixel position and a displacement uncertainty, and the displacement uncertainty indicates an accuracy of a displacement corresponding to any pixel position in the displacement information feature map;

Step 34: extracting a displacement uncertainty corresponding to the target displacement from the displacement uncertainty feature map according to the target pixel position.

In this specific implementation, the second convolution operation is performed on the above determined fusion feature map to obtain the displacement uncertainty feature map. Then, the displacement uncertainty corresponding to the target displacement is extracted from the displacement uncertainty feature map according to the target pixel position.

Wherein, the displacement uncertainty feature map is used to represent the correspondence between the pixel position and the displacement uncertainty, and the displacement uncertainty indicates the accuracy of the displacement corresponding to any pixel position in the displacement information feature map.

In the above implementation, a magnitude of the displacement uncertainty reflects an accuracy of the determined target displacement, that is, the larger the displacement uncertainty is, the lower the accuracy of the obtained target displacement will be. Correspondingly, the smaller the displacement uncertainty is, the higher the accuracy of the obtained target displacement will be. Therefore, in practical applications, multiple groups of two frame images can be acquired and input to the displacement determination model in multiple times to obtain multiple target displacements and multiple displacement uncertainties. Then, a target displacement with the smallest corresponding displacement uncertainty is selected from the multiple target displacements, and the movement speed of the target object is determined by using the target displacement with the smallest displacement uncertainty, so that the movement speed of the target object is determined more accurately.

Correspondingly, optionally, in one specific implementation, the displacement determination model further includes a displacement uncertainty feature map determination module in addition to the feature extraction module, the fusion module and the displacement information feature map determination module;
the displacement uncertainty feature map determination module is configured for outputting the displacement uncertainty feature map according to the fusion feature map.

Specifically, the displacement uncertainty feature map is obtained according to the first image, the second image and the displacement determination model; the displacement determination model is also configured for obtaining the displacement uncertainty feature map according to the fusion feature, wherein the displacement uncertainty feature map includes a displacement uncertainty corresponding to the target displacement, and the displacement uncertainty is used to indicate the degree of uncertainty in the target displacement.

That is to say, the first feature is extracted from the first image and the second feature is extracted from the second image by using the feature extraction module in the displacement determination model. Then, the first feature and the second feature are fused by using the fusion module to obtain and output the fusion feature map. Finally, the displacement information feature map is output based on the fusion feature map by using the displacement information feature map determination module.

Then, the displacement uncertainty feature map is obtained based on the fusion feature map by using the displacement uncertainty feature map determination module and is output.

As can be seen from the above, in this implementation, by inputting two frame images of the target object acquired at different acquisition time into the displacement determination model, the displacement uncertainty of the target object can be directly determined, that is, by inputting the fusion feature map obtained based on the two frame images into the displacement uncertainty feature map determination module, the displacement uncertainty of the target object can be obtained. This method is simple and direct, and is convenient for practical application.

That is, when determining the displacement information feature map and the displacement uncertainty feature map of the target object by using the displacement determination model, firstly, based on the received two frame images of the target object at different acquisition times, the first feature is extracted from the first image and the second feature is extracted from the second image by using the feature extraction module in the displacement determination model, and then the first feature and the second feature is fused by using the fusion module in the model to obtain the fusion feature map and output it to the displacement information feature map determination module in the model, thereby obtaining the displacement information feature map based on the fusion feature map by using the displacement information feature map determination module and outputting it. At the same time, the fusion module in the model outputs the obtained fusion feature map to the displacement uncertainty feature map determination module in the model, thereby obtaining the displacement uncertainty feature map based on the fusion feature map by using displacement uncertainty feature map determination module and outputting it.

For example, if multiple target displacements are obtained for the same target object by using multiple frame images, and taking three target displacements as an example, the displacement uncertainty corresponding to the first target displacement is 0.9, the displacement uncertainty corresponding to the second target displacement is 0.5 and the displacement uncertainty corresponding to the third target displacement is 0.7, then the second target displacement is more accurate than the third target displacement; and the third target displacement is more accurate than the first target displacement.

The feature extraction module is configured for extracting the first feature and the second feature. The first feature and the second feature include bottom-level features and multiscale features from different environment space angles. The first feature layer in the feature extraction module extracts the bottom-level features of the image, namely the first bottom-level feature and the second bottom-level feature, from the first image and the second image, respectively, and uses the second feature layer in the feature extraction module to extract the multiscale features of the image, namely the first feature and the second feature, from the first bottom-level feature and the second bottom-level feature, respectively. The fusion module is configured for fusing the first feature and the second feature to obtain the fusion feature. The displacement information feature map determination module is configured for performing a convolution operation on the fusion feature to obtain the displacement information feature map.

Optionally, the displacement determination module further includes a target displacement output module for obtaining a target displacement according to the target pixel coordinate and the displacement information feature map.

As an example, the displacement determination model includes an bottom-level feature extraction module, a multiscale feature extraction module, a front and back frame feature fusion module, a displacement dx/dy/dz prediction module, and a displacement uncertainty $\sigma x/\sigma y/\sigma z$ prediction module.

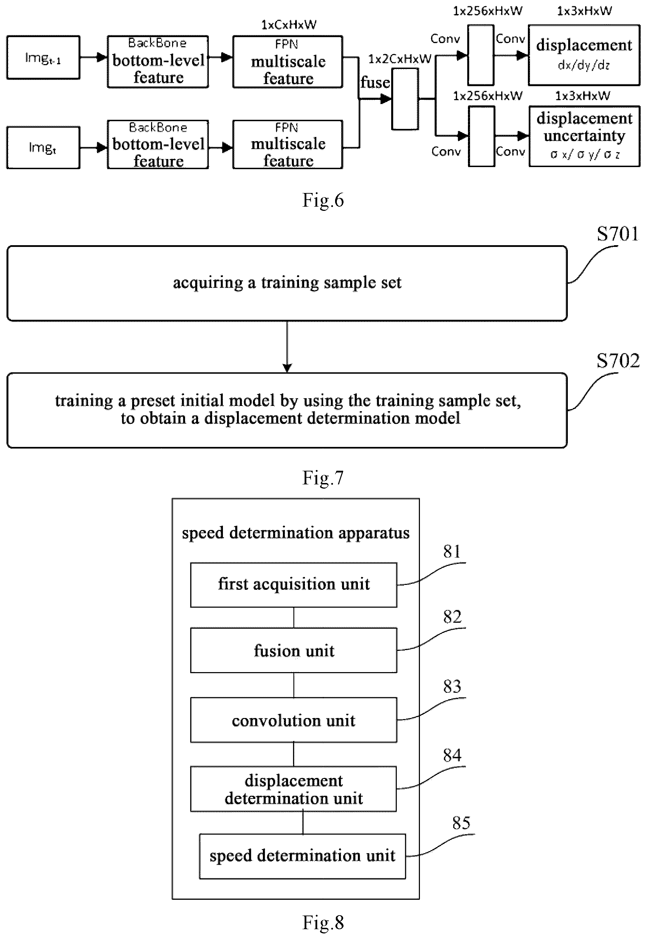

As shown in Fig. 6, it is a schematic diagram of a network structure of a displacement determination model provided by an embodiment of the present application.

Wherein BackBone bottom-level feature in Fig. 6 is an bottom-level feature extraction module, which is configured to extract bottom-level features of the image $Img_t$ at timestamp $time_t$ and the image $Img_{t-1}$ at timestamp $time_{t-1}$, respectively, to obtain the BackBone bottom-level feature.

The so-called BackBone bottom-level feature is main components of the model, and is usually a convolutional neural network (CNN) or a residual neural network (ResNet), etc. The backbone is responsible for extracting the features of the input image for subsequent processing and analysis.

The FPN (Feature pyramid network) multiscale feature in Fig. 6 is a multiscale feature extraction module, which is configured to extract FPN multiscale features of 4-dimension $1 \times C \times H \times W$ from the bottom-level features respectively.

Wherein, the FPN multiscale features are used to solve the multiscale problem in object detection. It greatly improves the object detection performance without increasing the amount of calculation by changing the network connection method.

The fusion in Fig. 6 is the front and back frame feature fusion module. This module is configured to fuse the features extracted from the front and back frames respectively, and fuse them in an overlay manner in the second dimension to obtain a fusion feature map of 4-dimension $1 \times 2C \times H \times W$.

dx/dy/dz in Fig. 6 is the displacement dx/dy/dz prediction module, and the displacement uncertainty $\sigma x/\sigma y/\sigma z$ prediction is the displacement uncertainty $\sigma x/\sigma y/\sigma z$ prediction module. These two modules are respectively configured to extract and fuse the high-level feature information of the fusion feature map through the first convolution operation to obtain a high-level feature map of 4-dimension $1 \times 256 \times H \times W$, then associate the high-level feature information of the front and back frames, perform the second convolution operation to extract the inter-frame features, and obtain the displacement information feature map and the displacement uncertainty feature map of 4-dimension $1 \times 3 \times H \times W$, to predict the target displacement.

Based on the above steps, S402 and S403 can be completed through the displacement determination model. In order to ensure an accuracy of the obtained target, the model is a trained model. The following is a detailed description of the training process of the model in conjunction with the accompanying drawings.

Fig. 7 is a schematic flow chart of a method for training a displacement determination model provided by an embodiment of the present application. The method includes the following steps:

S701, acquiring a training sample set.

Wherein, each training sample in the training sample set includes a first training image and a second training image during movement of a sample object, and a label corresponding to the training sample; a first sampling time of the first training image is later than a second sampling time of the second training image; and the label includes a first actual pixel position of the sample object in the first training image and an actual displacement of the sample object occurred between the first sampling time and the second sampling time.

S702, training a preset initial model by using the training sample set, to obtain the displacement determination model.

The displacement determination model is configured for obtaining a displacement information feature map according to images at two different times, wherein the displacement information feature map represents a correspondence between a pixel coordinate and a displacement of the sample object within a time interval between two different time.

Wherein, the initial model includes a feature extraction module, a fusion module and a displacement information feature map determination module.

The feature extraction module is configured for extracting a first feature from the first training image and a second feature from the second training image;

the fusion module is configured for fusing the first feature and the second feature to obtain a fusion feature map, wherein the fusion feature map includes first pixel position information and second pixel position information of the sample object, the first pixel position information represents a pixel position of the sample object in the first training image, and the second pixel position information represents a pixel position of the sample object in the second training image;

the displacement information feature map determination module is configured for outputting a displacement information feature map according to the fusion feature map, wherein the displacement information feature map represents a correspondence between the pixel position and the displacement;

a displacement in the displacement information feature map corresponding to the first actual pixel position is a predicted displacement output by the initial model.

Optionally, in one specific implementation, in the above step S702, training loss needs to be considered during the training process, and the following steps will be repeated multiple times: after completing one training, calculating the training loss, and adjusting parameters of the initial model based on the training loss. After multiple trainings, the displacement determination model is finally obtained.

Optionally, the training loss includes a first training loss, which is also called a spatial displacement loss.

Based on this, optionally, in one specific implementation, the above step S702 may include the following steps 33-35:

Step 33: inputting the training sample into the initial model to obtain the predicted displacement output by the initial model;

Step 34: determining a first training loss according to the predicted displacement and the actual displacement;

Step 35: adjusting parameters of the initial model according to a training loss to obtain the displacement determination model.

Wherein, the training loss includes the first training loss.

**In** this specific implementation, when training the displacement determination model, after determining an initial model for training, the training sample can be input into the above initial model to obtain the predicted displacement output by the above initial model, and then, the first training loss is determined based on the above predicted displacement and the actual displacement. Thus, the parameters of the above initial model are adjusted according to the determined training loss, and then, a desired displacement determination model is obtained.

Optionally, in one specific implementation, the training loss includes a second training loss, which is also called a pixel displacement loss. Wherein, the label further includes an actual pixel displacement and a first actual position of the sample object.

Therefore, the above step S702 can further include the following steps 44-47:

Step 44: predicting an actual position of the sample object at the second sampling time according to the predicted displacement and the first actual position to obtain a predicted second actual position;

Step 45: predicting an actual pixel position of the sample object in the second training image according to the predicted second actual position to obtain a predicted second actual pixel position;

Step 46: obtaining a predicted pixel displacement according to the predicted second actual pixel position and the first actual pixel position;

Step 47: determining a second training loss according to the predicted pixel displacement and the actual pixel displacement.

In this specific implementation, when training the displacement determination model, the actual position of the sample object at the second sampling time can be predicted based on the predicted displacement and the first actual position, to thereby obtain the predicted second actual position. Then, the actual pixel position of the sample object in the second training image can be predicted based on the predicted second actual position, to thereby obtain the predicted second actual pixel position. In this way, the predicted pixel displacement can be obtained based on the predicted second actual pixel position and the first actual pixel position, and thereby the second training loss is determined based on the predicted pixel displacement and the actual pixel displacement.

As an example, during the training, the training loss includes a spatial displacement loss and a pixel displacement loss, wherein the pixel displacement loss is a difference between a value output by a pixel displacement prediction module and an actual pixel displacement.

Optionally, in one specific implementation, the displacement determination model is obtained after training the initial model using a training sample set and deleting the pixel displacement prediction module in the initial model; the network structure of the initial model includes a feature extraction module, a fusion module, a displacement information feature map determination module, a target displacement output module, and a pixel displacement prediction module; the pixel displacement prediction module is configured for obtaining a predicted pixel displacement based on the target displacement output by the target displacement output module.

It should be understood that during training, multi-task learning is performed to share the feature extraction module and the fusion module, and the shared feature extraction module and fusion module can learn more basic, more general, and more relevant features. The pixel displacement prediction module uses the output of the target displacement module as one input to determine the predicted pixel displacement. That is, the fusion feature obtained by the feature extraction module and the fusion module is independently transmitted to the target displacement module, that is, the target displacement module is not affected by the pixel displacement prediction module, and deleting of the pixel displacement prediction module will not affect the target displacement module. However, during training, the predicted pixel displacement output by the pixel displacement prediction module is used to assist the feature extraction module and the fusion module in improving the learning emphasis on the pixel displacement feature during the regression process, improve the accuracy of the training process, and thus improve the accuracy of the target displacement determination model. In addition, in this specific implementation, the pixel displacement prediction module is deleted from the displacement determination model, which saves computational overhead and realizes the miniaturization of the displacement determination model without affecting the accuracy of the displacement determination model.

In the above specific implementation, the displacement loss function includes displacement errors in two dimensions, namely, an error in the three-dimensional spatial coordinate displacement and an error in the pixel displacement on the image. In view of the projection transformation relationship between the image pixel coordinate and the environment spatial coordinate, the image pixel coordinate will affect the three-dimensional spatial coordinate displacement. Therefore, considering the error in the pixel displacement and the error in the three-dimensional spatial coordinate displacement together during the training will make the trained displacement determination model more accurate.

Optionally, in one specific implementation, the initial model further includes a displacement uncertainty feature map determination module;

the displacement uncertainty feature map determination module is configured for outputting a displacement uncertainty feature map based on the fusion feature map, wherein the displacement uncertainty feature map is used to represent a correspondence between a pixel position and a displacement uncertainty, and the displacement uncertainty represents an accuracy of a displacement corresponding to any pixel position in the displacement information feature map.

In this specific implementation, the initial model further includes a displacement uncertainty feature map determination module in addition to the feature extraction module, the fusion module and the displacement information feature map determination module.

Specifically, the displacement uncertainty feature map is obtained based on the first training image, the second training image and the initial model; the initial model is further configured for obtaining the displacement uncertainty feature map based on the fusion feature, wherein the displacement uncertainty feature map includes a displacement uncertainty corresponding to the predicted displacement, and the displacement uncertainty is used to indicate the accuracy of the displacement corresponding to any pixel position in the displacement information feature map.

That is to say, the first feature is extracted from the first training image and the second feature is extracted from the second training image by using the feature extraction module in the initial model. Then, the first feature and the second feature are fused by using the fusion module to obtain and output the fusion feature map. Finally, the displacement information feature map is output based on the fusion feature map by using the displacement information feature map determination modules.

Then, the displacement uncertainty feature map is obtained based on the fusion feature map by using the displacement uncertainty feature map determination module and is output.

Optionally, the training loss includes a third training loss, which is also called a displacement uncertainty loss.

Based on this, optionally, in one specific implementation, the above step S702 of training the preset initial model by using the training sample set, to obtain the displacement determination model, may further include the following step 55:

Step 55: determining a third training loss according to the displacement uncertainty and the actual displacement.

The training loss further includes the third training loss.

In this specific implementation, the third training loss may also be determined according to the displacement uncertainty and the actual displacement, and thus the parameters of the initial model are adjusted according to the determined third training loss, to further obtain the desired displacement determination model.

As an example, the displacement uncertainty loss is an expected variance between the uncertainty output by the displacement uncertainty output module and the actual displacement. Specifically, the network structure of the initial model also includes a displacement uncertainty output module; during training, the training loss also includes the uncertainty loss. Wherein, the displacement uncertainty loss is an expected variance between the uncertainty output by the displacement uncertainty output module and the actual displacement.

In this specific implementation, the influence of the displacement uncertainty is taken into consideration, and the error in the displacement uncertainty is used as a loss function, which will make the displacement output by the displacement determination model more certain, thereby ensuring the accuracy of the obtained target displacement.

Optionally, in one specific implementation, the training loss is referred to as a loss value, the first training loss is a spatial displacement loss; the second training loss is a pixel displacement loss; and the third training loss is a displacement uncertainty loss.

During training, the loss value includes the spatial displacement loss, the pixel displacement loss and the displacement uncertainty loss. The pixel displacement loss is the difference between the predicted pixel displacement output by the pixel displacement prediction module and the actual pixel displacement.

After performing a training task once for each training sample, a training displacement information feature map corresponding to each training sample is obtained based on the initial model. The predicted displacement of the sample object is obtained from the training displacement information feature map according to the first pixel coordinate of the sample object in the first training image; the difference between the predicted displacement and the actual displacement corresponding to each training sample is determined as the displacement error; the predicted pixel coordinate of the sample object in the second training image is predicted according to the predicted displacement; the difference between the predicted pixel coordinate and the second pixel coordinate of the sample object in the second training image is determined as the error in the pixel displacement.

As an example, the actual first pixel coordinate $(u,v)_{gt}$ of the sample object on the first training image is obtained according to the actual coordinate $(x,y,z)_{gt}$ of the sample object by the following formula (3).

$$\begin{bmatrix} u \\ v \\ 1 \end{bmatrix}_{gt}^{t} = \begin{bmatrix} fx & 0 & cx \\ 0 & fy & cy \\ 0 & 0 & 1 \end{bmatrix} \times \begin{bmatrix} x \\ y \\ z \end{bmatrix}_{gt}^{t} \qquad (3)$$

Wherein, $\begin{bmatrix} x \\ y \\ z \end{bmatrix}_{gt}^{t}$ represents the actual three-dimensional spatial coordinate vector of the sample object in the x-direction, y direction and z direction, $\begin{bmatrix} u \\ v \\ 1 \end{bmatrix}_{gt}^{t}$ is the coordinate vector composed of the actual pixel coordinate of the sample object on the first training image and the real number 1, t represents time, and gt represents the sample object of the first training image.

Further, as shown in the following formula (4), the predicted displacement (dx, dy, dz)$_{gt}$ of the sample object is obtained from the training displacement information feature map according to the actual first pixel coordinate (u, v)$_{gt}$. The predicted spatial coordinate of the sample object in the second training image are predicted by the sum of the predicted displacement (dx, dy, dz)$_{gt}$ and the actual coordinate (x,y,z)$_{gt}$, thereby obtaining the predicted pixel coordinate (u,v)$_{gt'}$ according to the predicted spatial coordinate.

$$\begin{bmatrix} u \\ v \\ 1 \end{bmatrix}_{gt\prime}^{t-1} = \begin{bmatrix} fx & 0 & cx \\ 0 & fy & cy \\ 0 & 0 & 1 \end{bmatrix} \times \left( \begin{bmatrix} x \\ y \\ z \end{bmatrix}_{gt}^{t} + \begin{bmatrix} dx \\ dy \\ dz \end{bmatrix}_{gt} \right) \qquad (4)$$

Wherein, $\begin{bmatrix} u \\ v \\ 1 \end{bmatrix}_{gt\prime}^{t-1}$ represents the coordinate vector composed of the predicted pixel coordinates of the sample object and the real number 1, $\begin{bmatrix} dx \\ dy \\ dz \end{bmatrix}_{gt}$ represents the predicted displacement vector of the predicted displacement, and gt' represents the sample object of the second training image.

Further, the predicted pixel displacement is obtained according to the following formula (5).

$$\begin{bmatrix} du \\ dv \end{bmatrix} = \begin{bmatrix} u \\ v \end{bmatrix}_{gt}^{t} - \begin{bmatrix} u \\ v \end{bmatrix}_{gt\prime}^{t-1} \qquad (5)$$

Wherein, $\begin{bmatrix} du \\ dv \end{bmatrix}$ is the two-dimensional vector of predicted pixel displacement, $\begin{bmatrix} u \\ v \end{bmatrix}_{gt}^{t}$ is the two-dimensional vector of the actual pixel coordinate of the sample object on the first training image, $\begin{bmatrix} u \\ v \end{bmatrix}_{gt\prime}^{t-1}$ is the two-dimensional vector of the predicted pixel coordinate of the sample object on the second training image; du represents the pixel displacement in the horizontal direction on the first training image, and dv represents the pixel displacement in the vertical direction on the first training image.

Further, the actual pixel displacement is obtained by the following formula (6). The pixel displacement loss is the difference between the actual pixel displacement and the predicted pixel displacement.

$$\begin{bmatrix} \Delta u \\ \Delta v \end{bmatrix} = \begin{bmatrix} u \\ v \end{bmatrix}_{gt}^{t} - \begin{bmatrix} u \\ v \end{bmatrix}_{gt}^{t-1} \qquad (6)$$

Wherein, $\begin{bmatrix} \Delta u \\ \Delta v \end{bmatrix}$ is the two-dimensional vector of the actual pixel displacement, $\begin{bmatrix} u \\ v \end{bmatrix}_{gt}^{t-1}$ is the two-dimensional vector of the actual pixel coordinate of the sample object on the second training image, $\Delta u$ is the actual pixel displacement in the horizontal direction, and $\Delta v$ is the actual pixel displacement in the vertical direction.

Further, according to formula (7), formula (8) and formula (9), the following displacement losses are calculated respectively: a spatial displacement loss in the x horizontal direction |dx-$\Delta$x|, a spatial displacement loss in the y horizontal direction |dy-$\Delta$y|, a spatial displacement loss in the z horizontal direction |dz-$\Delta$z|, a pixel displacement loss in the horizontal direction |du-$\Delta$u|, a pixel displacement loss in the vertical direction |dv-$\Delta$v|.

$$L(dx) = |dx - \Delta x| + |du - \Delta u| \qquad (7)$$

$$L(dy) = |dy - \Delta y| + |dv - \Delta v| \qquad (8)$$

$$L(dz) = |dz - \Delta z| \qquad (9)$$

Wherein, the displacement loss in the x-direction is L(dx), the displacement loss in the y-direction is L(dy), the horizontal displacement loss in the z-direction is L(dz), $\Delta x$ is the actual displacement in the x-direction, $\Delta y$ is the actual displacement in the y-direction, and $\Delta z$ is the actual displacement in the z-direction.

In this specific implementation, the displacement loss function includes displacement errors in two dimensions, namely, an error in the three-dimensional spatial coordinate displacement and an error in the pixel displacement on the image. In view of the projection transformation relationship between the image pixel coordinate and the environment spatial coordinate, the image pixel coordinate will affect the displacement of the three-dimensional spatial coordinate. Therefore, considering the error in the pixel displacement and the error in the three-dimensional spatial coordinate displacement together during the training process will make the trained displacement determination model more accurate.

As one possible implementation, the network structure of the initial model further includes a displacement uncertainty output module; during training, the loss value also includes a displacement uncertainty loss, wherein the displacement uncertainty loss is the expected variance between the uncertainty output by the displacement uncertainty output module and the actual displacement.

Specifically, after performing a training task once for each training sample, a training uncertainty feature map corresponding to each training sample is obtained. The uncertainty of the predicted displacement is obtained from the training uncertainty feature map according to the first pixel coordinate of the target sample object in the first training image; the error in the uncertainty corresponding to the predicted displacement is determined according to the actual displacement and uncertainty corresponding to the training sample.

As an example, it is calculated by the following formula (10).

$$L(\sigma x) = \frac{(dx - \Delta x)^2}{2 \times \sigma x^2} + \log(\sigma x^2) \qquad (10)$$

$$L(\sigma y) = \frac{(dy - \Delta y)^2}{2 \times \sigma y^2} + \log(\sigma y^2) \qquad (11)$$

$$L(\sigma z) = \frac{(dz - \Delta z)^2}{2 \times \sigma z^2} + \log(\sigma z^2) \qquad (12)$$

Wherein, L($\sigma x$) is an uncertainty loss in the x-direction, L($\sigma y$) is an uncertainty loss in the y-direction, L($\sigma z$) is an uncertainty loss in the z-direction, $\sigma x$ is an uncertainty in the x-direction, $\sigma y$ is an uncertainty in the y-direction, $\sigma z$ and is an uncertainty in the z-direction.

In this specific implementation, the influence of displacement uncertainty is taken into consideration, and the error in the displacement uncertainty is used as a loss function, which will make the displacement output by the displacement determination model more certain, thereby ensuring the accuracy of the obtained target displacement.

Therefore, the obtained total loss is the sum of the individual losses, as shown in formula (13).

$$L = L(dx) + L(dy) + L(dz) + L(\sigma x) + L(\sigma y) + L(\sigma z) \qquad (13)$$

It should be noted that the initial model for the multi-task learning provided by the embodiment of the present application is describe based on the above modules. The multiple tasks may also include tasks such as feature segmentation that enable the feature extraction network module to extract the bottom-level and common features. The embodiment of the present application does not limit this.

The above mainly introduces the solution provided by the embodiments of the present application from the perspective of the method. **In** order to achieve the above functions, it includes corresponding hardware structures and/or software modules for the execution of each function. It should be readily appreciated by for those skilled in the art that the present application can be implemented in the form of hardware or a combination of hardware and computer software combined with the units and algorithm steps of examples described in the embodiments disclosed herein. Whether a function is executed in the form of hardware or computer software driving hardware depends on the specific application and design constraints of the technical solution. Those skilled in the art can use different methods to implement the described functions for each specific application, but such implementation should not be considered to be beyond the scope of the present application.

The present application further provides an image-based speed determination apparatus, as shown in Fig. 8, including a first acquisition unit 81, a fusion unit 82, a convolution unit 83, a displacement determination unit 84 and a speed determination unit 85.

The first acquisition unit 81 is configured for acquiring a first image and a second image of a target object during movement of the target object in an environment space, wherein an acquisition time of the first image is later than an acquisition time of the second image; the fusion unit 82 is configured for configured for fusing a first feature extracted from the first image and a second feature extracted from the second image to obtain a fusion feature map, wherein the fusion feature map includes first pixel position information and second pixel position information of the target object, the first pixel position information represents a pixel position of the target object in the first image, and the second pixel position information represents a pixel position of the target object in the second image; the convolution unit 83 is configured for performing a first convolution operation on the fusion feature map to obtain a displacement information feature map, wherein the displacement information feature map is used to represent a correspondence between a pixel position and a displacement; the displacement determination unit 84 is configured for extracting, from the displacement information feature map, a target displacement corresponding to a target pixel position, wherein the target pixel position is a pixel position in the displacement information feature map corresponding to the first pixel position information of the target object; the speed determination unit 85 is configured for determining a movement speed of the target object at the acquisition time of the first image according to the target displacement.

Optionally, in one specific implementation, the displacement determination unit 84 is further specifically configured for acquiring a target spatial position of the target object at the acquisition time of the first image, wherein the target spatial position is a three-dimensional position of the target object in the environment space; determining a two-dimensional projection position obtained by projecting the target spatial position on the first image; transforming the two-dimensional projection position into the target pixel position according to a ratio of a size of the first image to a size of the displacement information feature map.

Optionally, in one specific implementation, the speed determination apparatus also includes a displacement uncertainty determination unit, which is specifically configured for performing a second convolution operation on the fusion feature map to obtain a displacement uncertainty feature map, wherein the displacement uncertainty feature map is used to represent a correspondence between a pixel position and a displacement uncertainty, and the displacement uncertainty indicates an accuracy of a displacement corresponding to any pixel position in the displacement information feature map; extracting a displacement uncertainty corresponding to the target displacement from the displacement uncertainty feature map according to the target pixel position.

Optionally, in one specific implementation, the speed determination apparatus is further configured for inputting the first image and the second image into a displacement determination model to obtain the displacement information feature map output by the displacement determination model.

Optionally, in one specific implementation, the displacement determination model includes a feature extraction module, a fusion module, and a displacement information feature map determination module; the feature extraction module is configured for extracting the first feature from the first image and extract the second feature from the second image; the fusion module is configured for fusing the first feature and the second feature to output the fusion feature map; the displacement information feature map determination module is configured for outputting the displacement information feature map according to the fusion feature map.

Optionally, in one specific implementation, the displacement determination model further includes a displacement uncertainty feature map determination module; wherein the displacement uncertainty feature map determination module is configured for outputting the displacement uncertainty feature map according to the fusion feature map.

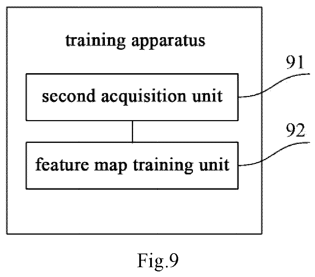

The present application further provides a training apparatus for a displacement determination model. As shown in Fig. 9, the training apparatus includes a second acquisition unit 9 1 and a feature map training unit 92.

The second acquisition unit 91 is configured for acquiring a training sample set, wherein each training sample in the training sample set includes a first training image and a second training image of a sample object during movement of the sample object, and a label corresponding to the training sample; a first sampling time of the first training image is later than a second sampling time of the second training image; and the label includes a first actual pixel position of the sample object in the first training image and an actual displacement of the sample object occurred between the first sampling time and the second sampling time; the feature map training unit 92 is configured for training a preset initial model by using the training sample set, to obtain the displacement determination model; wherein the initial model includes a feature extraction module, a fusion module and a displacement information feature map determination module; the feature extraction module is configured for extracting a first feature from the first training image and a second feature from the second training image; the fusion module is configured for fusing the first feature and the second feature to obtain a fusion feature map, wherein the fusion feature map includes first pixel position information and second pixel position information of the sample object, the first pixel position information represents a pixel position of the sample object in the first training image, and the second pixel position information represents a pixel position of the sample object in the second training image; the displacement information feature map determination module is configured for outputting a displacement information feature map according to the fusion feature map, wherein the displacement information feature map represents a correspondence between a pixel position and a displacement; a displacement in the displacement information feature map corresponding to the first actual pixel position is a predicted displacement output by the initial model.

Optionally, in one specific implementation, the feature map training unit 92 is specifically configured for inputting the training sample into the initial model to obtain the predicted displacement output by the initial model; determining a first training loss according to the predicted displacement and the actual displacement; adjusting parameters of the initial model according to a training loss to obtain the displacement determination model; wherein, the training loss includes the first training loss.

Optionally, in one specific implementation, the feature map training unit 92 is further specifically configured for predicting an actual position of the sample object at the second sampling time according to the predicted displacement and the first actual position to obtain a predicted second actual position; predicting an actual pixel position of the sample object in the second training image according to the predicted second actual position to obtain a predicted second actual pixel position; obtaining a predicted pixel displacement according to the predicted second actual pixel position and the first actual pixel position; determining a second training loss according to the predicted pixel displacement and the actual pixel displacement; the training loss further includes the second training loss.

Optionally, in one specific implementation, the displacement uncertainty feature map determination module is configured for outputting a displacement uncertainty feature map based on the fusion feature map, wherein the displacement uncertainty feature map is used to represent a correspondence between a pixel position and a displacement uncertainty, and the displacement uncertainty represents an accuracy of a displacement corresponding to any pixel position in the displacement information feature map.

Optionally, in one specific implementation, the feature map training unit 92 is further specifically configured for determining a third training loss according to the displacement uncertainty and the actual displacement; the training loss further includes the third training loss.

It should be noted that the above division of units is schematic and is only a logical function division. There may be other division methods in actual implementation. For example, two or more functions may be integrated into one processing unit. The above integrated unit may be implemented in the form of hardware or in the form of software functional units.

In an exemplary embodiment, an embodiment of the present application further provides a readable storage medium including software instructions, which, when running on an electronic device (computing processing device), causes the electronic device (computing processing device) to execute any one of the methods provided by the above embodiments.

In an exemplary embodiment, the embodiment of the present application further provides a computer program product containing computer-executable instructions, which, when running on an electronic device (computing processing device), causes the electronic device (computing processing device) to execute any one of the methods provided by the above embodiments.

In an exemplary embodiment, the embodiment of the present application further provides a computer program, which, when running on a computer, causes the computer to execute any one of the methods provided by the above embodiments.

In the above embodiments, it may be implemented in whole or in part by software, hardware, firmware or any combination thereof. When implemented in software, it can be implemented in whole or in part in the form of a computer program product. The computer program product includes one or more computer-executable instructions. When the computer program instructions are loaded and executed on a computer, the processes or functions described in the embodiments of the present application are generated in whole or in part. The computer may be a general purpose computer, special purpose computer, computer network, or other programmable device. The computer-executable instructions may be stored in a computer readable storage medium or transmitted from one computer readable storage medium to another computer readable storage medium, for example, the computer-executable instructions may be transmitted from a website, computer, server or data center to another website, computer, server, or data center by wire (such as coaxial cable, fiber optic, digital subscriber line (DSL)) or wirelessly (such as infrared, wireless, microwave, etc.). The computer-readable storage medium may be any usable medium that can be accessed by a computer or a data storage device such as a server and a data center and the like that includes an integration of one or more available medium. The usable media may be magnetic media (such as a floppy disk, a hard disk, a magnetic tape), optical media (such as DVD), and the like.

Although the present application is described herein in conjunction with various embodiments, in the process of implementing the claimed application, those skilled in the art may understand and implement other changes to the disclosed embodiments by viewing the drawings, the disclosure, and the appended claims. In the claims, the word "comprising" does not exclude other components or steps, and "one" or "an" does not exclude a situation of multiple. A single processor or other unit may implement several functions listed in a claim. Certain measures are recorded in different dependent claims, but this does not mean that these measures cannot be combined to produce good results.

Although the present application has been described in conjunction with specific features and embodiments thereof, it is obvious that various modifications and combinations may be made thereto without departing from the spirit and scope of the present application. Accordingly, this specification and the drawings are merely exemplary illustrations of the present application as defined by the appended claims, and are deemed to have covered any and all modifications, variations, combinations or equivalents within the scope of the present application. Obviously, those skilled in the art may make various modifications and variations to the present application without departing from the spirit and scope of the present application. Thus, if these modifications and variations of the present application fall within the scope of the claims of the present application and their equivalents, the present application is also intended to include these modifications and variations.

The above is only one specific implementation of the present application, but the protection scope of the present application is not limited thereto. Any changes or substitutions within the technical scope disclosed in the present application should be included in the protection scope of the present application. Therefore, the protection scope of the present application should be based on the protection scope of the claims.

**Claims**

1. An image-based speed determination method, comprising:

   acquiring a first image and a second image of a target object during movement of the target object in an environment space, wherein an acquisition time of the first image is later than an acquisition time of the second image;
   fusing a first feature extracted from the first image and a second feature extracted from the second image to obtain a fusion feature map, wherein the fusion feature map comprises first pixel position information and second pixel position information of the target object, the first pixel position information represents a pixel position of the target object in the first image, and the second pixel position information represents a pixel position of the target object in the second image;
   performing a first convolution operation on the fusion feature map to obtain a displacement information feature map, wherein the displacement information feature map is used to represent a correspondence between a pixel position and a displacement;
   extracting, from the displacement information feature map, a target displacement corresponding to a target pixel position, wherein the target pixel position is a pixel position in the displacement information feature map corresponding to the first pixel position information of the target object;
   determining a movement speed of the target object at the acquisition time of the first image according to the target displacement.

2. The image-based speed determination method according to claim 1, wherein the method further comprises:

   acquiring a target spatial position of the target object at the acquisition time of the first image, wherein the target spatial position is a three-dimensional position of the target object in the environment space;
   determining a two-dimensional projection position obtained by projecting the target spatial position on the first image;
   transforming the two-dimensional projection position into the target pixel position according to a ratio of a size of the first image to a size of the displacement information feature map.

3. The image-based speed determination method according to claim 2, wherein the method further comprises:

   performing a second convolution operation on the fusion feature map to obtain a displacement uncertainty feature map; wherein the displacement uncertainty feature map is used to represent a correspondence between a pixel position and a displacement uncertainty, and the displacement uncertainty indicates an accuracy of a displacement corresponding to any pixel position in the displacement information feature map;
   extracting a displacement uncertainty corresponding to the target displacement from the displacement uncertainty feature map according to the target pixel position.

4. The image-based speed determination method according to claim 3, wherein fusing the first feature extracted from the first image and the second feature extracted from the second image to obtain the fusion feature map, and performing the first convolution operation on the fusion feature map to obtain the displacement information feature map, comprises:

inputting the first image and the second image into a displacement determination model to obtain the displacement information feature map output by the displacement determination model.

5. The image-based speed determination method according to claim 4, wherein the displacement determination model comprises a feature extraction module, a fusion module, and a displacement information feature map determination module;

the feature extraction module is configured for extracting the first feature from the first image and extract the second feature from the second image;
the fusion module is configured for fusing the first feature and the second feature to output the fusion feature map;
the displacement information feature map determination module is configured for outputting the displacement information feature map according to the fusion feature map.

6. The image-based speed determination method according to claim 5, wherein the displacement determination model further comprises a displacement uncertainty feature map determination module;
the displacement uncertainty feature map determination module is configured for outputting the displacement uncertainty feature map according to the fusion feature map.

7. A training method for a displacement determination model, comprising:

acquiring a training sample set, wherein each training sample in the training sample set comprises a first training image and a second training image of a sample object during movement of the sample object, and a label corresponding to the training sample; a first sampling time of the first training image is later than a second sampling time of the second training image; and the label comprises a first actual pixel position of the sample object in the first training image and an actual displacement of the sample object occurred between the first sampling time and the second sampling time;
training a preset initial model by using the training sample set, to obtain the displacement determination model; wherein the initial model comprises a feature extraction module, a fusion module and a displacement information feature map determination module;
the feature extraction module is configured for extracting a first feature from the first training image and a second feature from the second training image;
the fusion module is configured for fusing the first feature and the second feature to obtain a fusion feature map, wherein the fusion feature map comprises first pixel position information and second pixel position information of the sample object, the first pixel position information represents a pixel position of the sample object in the first training image, and the second pixel position information represents a pixel position of the sample object in the second training image;
the displacement information feature map determination module is configured for outputting a displacement information feature map according to the fusion feature map, wherein the displacement information feature map represents a correspondence between a pixel position and a displacement;
a displacement in the displacement information feature map corresponding to the first actual pixel position is a predicted displacement output by the initial model.

8. The training method according to claim 7, wherein training the preset initial model by using the training sample set, to obtain the displacement determination model, comprises:

inputting the training sample into the initial model to obtain the predicted displacement output by the initial model;
determining a first training loss according to the predicted displacement and the actual displacement;
adjusting parameters of the initial model according to a training loss to obtain the displacement determination model; wherein, the training loss comprises the first training loss.

9. The training method according to claim 8, wherein the label further comprises an actual pixel displacement and a first actual position of the sample object, and the training method further comprises:

predicting an actual position of the sample object at the second sampling time according to the predicted displacement and the first actual position to obtain a predicted second actual position;

predicting an actual pixel position of the sample object in the second training image according to the predicted second actual position to obtain a predicted second actual pixel position;

obtaining a predicted pixel displacement according to the predicted second actual pixel position and the first actual pixel position;

determining a second training loss according to the predicted pixel displacement and the actual pixel displacement;

the training loss further comprises the second training loss.

10. The training method according to any one of claims 8 to 9, wherein the initial model further comprises a displacement uncertainty feature map determination module;

the displacement uncertainty feature map determination module is configured for outputting a displacement uncertainty feature map based on the fusion feature map, wherein the displacement uncertainty feature map is used to represent a correspondence between a pixel position and a displacement uncertainty, and the displacement uncertainty represents an accuracy of a displacement corresponding to any pixel position in the displacement information feature map.

11. The training method according to claim 10, wherein training the preset initial model by using the training sample set, to obtain the displacement determination model, further comprises:

determining a third training loss according to the displacement uncertainty and the actual displacement;

the training loss further comprises the third training loss.

12. An image-based speed determination apparatus, comprising:

a first acquisition unit, configured for acquiring a first image and a second image of a target object during movement of the target object in an environment space, wherein an acquisition time of the first image is later than an acquisition time of the second image;

a fusion unit, configured for fusing a first feature extracted from the first image and a second feature extracted from the second image to obtain a fusion feature map, wherein the fusion feature map comprises first pixel position information and second pixel position information of the target object, the first pixel position information represents a pixel position of the target object in the first image, and the second pixel position information represents a pixel position of the target object in the second image;

a convolution unit, configured for performing a first convolution operation on the fusion feature map to obtain a displacement information feature map, wherein the displacement information feature map is used to represent a correspondence between a pixel position and a displacement;

a displacement determination unit, configured for extracting, from the displacement information feature map, a target displacement corresponding to a target pixel position, wherein the target pixel position is a pixel position in the displacement information feature map corresponding to the first pixel position information of the target object;

a speed determination unit, configured for determining a movement speed of the target object at the acquisition time of the first image according to the target displacement.

13. The speed determination apparatus according to claim 12, wherein the speed determination apparatus further comprises a displacement uncertainty determination unit;

the displacement determination unit is specifically configured for acquiring a target spatial position of the target object at the acquisition time of the first image, wherein the target spatial position is a three-dimensional position of the target object in the environment space; determining a two-dimensional projection position obtained by projecting the target spatial position on the first image; transforming the two-dimensional projection position into the target pixel position according to a ratio of a size of the first image to a size of the displacement information feature map;

the displacement uncertainty determination unit is specifically configured for performing a second convolution operation on the fusion feature map to obtain a displacement uncertainty feature map, wherein the displacement uncertainty feature map is used to represent a correspondence between a pixel position and a displacement uncertainty, and the displacement uncertainty indicates an accuracy of a displacement corresponding to any pixel position in the displacement information feature map; extracting a displacement uncertainty corresponding to the target displacement from the displacement uncertainty feature map according to the target pixel position;

the speed determination apparatus is further configured for inputting the first image and the second image into a displacement determination model to obtain the displacement information feature map output by the displacement determination model;

wherein, the displacement determination model comprises a feature extraction module, a fusion module, and a displacement information feature map determination module; the feature extraction module is configured for extracting the first feature from the first image and extract the second feature from the second image; the fusion module is configured for fusing the first feature and the second feature to output the fusion feature map; the displacement information feature map determination module is configured for outputting the displacement information feature map according to the fusion feature map; the displacement determination model further comprises a displacement uncertainty feature map determination module; the displacement uncertainty feature map determination module is configured for outputting the displacement uncertainty feature map according to the fusion feature map.

14. A training apparatus for a displacement determination model, comprising:

a second acquisition unit, configured for acquiring a training sample set, wherein each training sample in the training sample set comprises a first training image and a second training image of a sample object during movement of the sample object, and a label corresponding to the training sample; a first sampling time of the first training image is later than a second sampling time of the second training image; and the label comprises a first actual pixel position of the sample object in the first training image and an actual displacement of the sample object occurred between the first sampling time and the second sampling time;

a feature map training unit, configured for training a preset initial model by using the training sample set, to obtain the displacement determination model; wherein the initial model comprises a feature extraction module, a fusion module and a displacement information feature map determination module;

the feature extraction module is configured for extracting a first feature from the first training image and a second feature from the second training image;

the fusion module is configured for fusing the first feature and the second feature to obtain a fusion feature map, wherein the fusion feature map comprises first pixel position information and second pixel position information of the sample object, the first pixel position information represents a pixel position of the sample object in the first training image, and the second pixel position information represents a pixel position of the sample object in the second training image;

the displacement information feature map determination module is configured for outputting a displacement information feature map according to the fusion feature map, wherein the displacement information feature map represents a correspondence between a pixel position and a displacement;

a displacement in the displacement information feature map corresponding to the first actual pixel position is a predicted displacement output by the initial model.

15. The training apparatus according to claim 14, wherein the label further comprises an actual pixel displacement and a first actual position of the sample object; the initial model further comprises a displacement uncertainty feature map determination module; the training apparatus is further configured as follows:

the feature map training unit is specifically configured for inputting the training sample into the initial model to obtain the predicted displacement output by the initial model; determining a first training loss according to the predicted displacement and the actual displacement; adjusting parameters of the initial model according to a training loss to obtain the displacement determination model; wherein, the training loss comprises the first training loss;

the feature map training unit is further specifically configured for predicting an actual position of the sample object at the second sampling time according to the predicted displacement and the first actual position to obtain a predicted second actual position; predicting an actual pixel position of the sample object in the second training image according to the predicted second actual position to obtain a predicted second actual pixel position; obtaining a predicted pixel displacement according to the predicted second actual pixel position and the first actual pixel position; determining a second training loss according to the predicted pixel displacement and the actual pixel displacement; the training loss further comprises the second training loss;

the displacement uncertainty feature map determination module is configured for outputting a displacement uncertainty feature map based on the fusion feature map, wherein the displacement uncertainty feature map is used to represent a correspondence between a pixel position and a displacement uncertainty, and the displacement uncertainty represents an accuracy of a displacement corresponding to any pixel position in the displacement information feature map;

the feature map training unit is further specifically configured for determining a third training loss according to the displacement uncertainty and the actual displacement; the training loss further comprises the third training loss.

16. An image-based speed determination apparatus, comprising:

a memory and a processor; the memory are coupled to the processor; the memory is configured to store computer program codes comprising computer instructions;
wherein, the computer instructions, when execute by the processor, cause the image-based speed determination apparatus to carry out the image-based speed determination method according to any one of claims 1 to 6.

17. A computer-readable storage medium comprising computer instructions;
wherein, the computer instructions, when running on an image-based speed determination apparatus, cause the image-based speed determination apparatus to carry out the image-based speed determination method according to any one of claims 1 to 6.

18. A training apparatus for a displacement determination model, comprising:

a memory and a processor; the memory is coupled to the processor; the memory is configured to store computer program codes comprising computer instructions;
wherein, the computer instructions, when execute by the processor, cause the training apparatus for the displacement determination model to carry out the training method for the displacement determination model according to any one of claims 7 to 11.

19. A computer-readable storage medium comprising computer instructions;
wherein, the computer instructions, when running on a training apparatus for a displacement determination model, cause the training apparatus for the displacement determination model to carry out the training method for the displacement determination model according to any one of claims 7 to 11.

20. A computer program product comprising instructions, which, when running on a computer, cause the computer to carry out the method according to any one of claims 1 to 6 and/or the method according to any one of claims 7 to 11.

21. A computer program, which, when running on a computer, causes the computer to execute the method according to any one of claims 1 to 6 and/or the method according to any one of claims 7 to 11.

Fig.1

Fig.2

10

60

processor

CPU0

CPU1

processor

CPU0

CPU1

communication
line 30

20

memory

40

50

communication
interface

input/output
interface

Fig.3

S401

acquiring a first image and a second image of a target object
during movement of the target object in an environment space

S402

fusing a first feature extracted from the first image and a second
feature extracted from the second image to obtain a fusion
feature map

S403

performing a first convolution operation on the fusion feature
map to obtain a displacement information feature map

S404

extracting, from the displacement information feature map, a target
displacement corresponding to a target pixel position, wherein the
target pixel position is a pixel position in the displacement
information feature map corresponding to the first pixel position
information of the target object

S405

determining a movement speed of the target object at an
acquisition time of the first image according to the target
displacement

Fig.4

fusion feature map (t)
1x2CxHxW

multiscale feature map (t-1)
1xCxHxW

multiscale feature map (t)
1xCxHxW

first feature map (t)
1xCxHxW

first feature map (t-1)
1xCxHxW

2 times
upsampling

2 times
upsampling

2 times
upsampling

2 times
upsampling

2 times
downsampling

2 times
downsampling

2 times
downsampling

2 times
downsampling

first original feature map (t)
1xCxHxW

second original feature map
(t-1)
1xCxHxW

Fig.5

1x256xHxW      1x3xHxW

1xCxHxW

Img$_{t-1}$ → BackBone bottom-level feature → FPN multiscale feature

1x2CxHxW fuse

Conv → Conv → displacement dx/dy/dz

Img$_t$ → BackBone bottom-level feature → FPN multiscale feature

1x256xHxW      1x3xHxW

Conv → Conv → displacement uncertainty σx/σy/σz

Fig.6

S701

acquiring a training sample set

S702

training a preset initial model by using the training sample set, to obtain a displacement determination model

Fig.7

speed determination apparatus

first acquisition unit — 81

fusion unit — 82

convolution unit — 83

displacement determination unit — 84

speed determination unit — 85

Fig.8

training apparatus

second acquisition unit — 91

feature map training unit — 92

Fig.9

## INTERNATIONAL SEARCH REPORT

| International application No. |
| --- |
| **PCT/CN2023/126267** |

### A.    CLASSIFICATION OF SUBJECT MATTER

G06T7/246(2017.01)i;  G06V10/80(2022.01)i

According to International Patent Classification (IPC) or to both national classification and IPC

### B.    FIELDS SEARCHED

Minimum documentation searched (classification system followed by classification symbols)

IPC:  G06T,  G06V

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI, VEN: 图像, 速度, 确定, 检测, 目标, 对象, 运动, 特征, 提取, 融合, 像素, 位移, image, speed, determinat+, detect+, object, target, motion, movement, feature, extract+, fus+, pixel, displacement

### C.    DOCUMENTS CONSIDERED TO BE RELEVANT

| Category* | Citation of document, with indication, where appropriate, of the relevant passages | Relevant to claim No. |
| --- | --- | --- |
| A | CN 113450579 A (TENCENT TECHNOLOGY (SHENZHEN) CO., LTD.) 28 September 2021 (2021-09-28)<br>description, paragraphs 0036-0129 | 1-21 |
| PX | CN 115830065 A (SHANGHAI GOLDWAY INTELLIGENT TRANSPORTATION SYSTEMS CO., LTD.) 21 March 2023 (2023-03-21)<br>claims 1-19 | 1-21 |
| A | CN 113808200 A (PETROMENTOR INTERNATIONAL EDUCATION (BEIJING) CO., LTD.) 17 December 2021 (2021-12-17)<br>entire document | 1-21 |
| A | CN 111596090 A (CHINA FAW CO., LTD.) 28 August 2020 (2020-08-28)<br>entire document | 1-21 |
| A | JP 2013152219 A (JAPAN TRAFFIC MANAGEMENT TECHNOLOGY ASSOCIATION; JP SYSTEMS K.K.; APPLIED VISION SYSTEMS CORP.) 08 August 2013 (2013-08-08)<br>entire document | 1-21 |
| A | US 2022301185 A1 (HONDA MOTOR CO., LTD.) 22 September 2022 (2022-09-22)<br>entire document | 1-21 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **06 December 2023** | **04 January 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/126267**

| Patent document cited in search report | | | Publication date (day/month/year) | Patent family member(s) | | | Publication date (day/month/year) |
|---|---|---|---|---|---|---|---|
| CN | 113450579 | A | 28 September 2021 | CN | 113450579 | B | 14 December 2021 |
| | | | | HK | 40052806 | A0 | 28 January 2022 |
| | | | | HK | 40052806 | A1 | 22 April 2022 |
| CN | 115830065 | A | 21 March 2023 | None | | | |
| CN | 113808200 | A | 17 December 2021 | CN | 113808200 | B | 07 April 2023 |
| CN | 111596090 | A | 28 August 2020 | None | | | |
| JP | 2013152219 | A | 08 August 2013 | JP | 5337905 | B2 | 06 November 2013 |
| US | 2022301185 | A1 | 22 September 2022 | JP | 2022142515 | A | 30 September 2022 |
| | | | | CN | 115082876 | A | 20 September 2022 |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211399309